# EUROPÄISCHE PATENTSCHRIFT

(11) **EP 4 703 623 B1**
(45) Veröffentlichungstag und Bekanntmachung des Hinweises auf die Patenterteilung: **11.11.2026**
(21) Anmeldenummer: 24198098.6
(22) Anmeldetag: 03.09.2024
(51) Int. Cl.: F17C 13/08, B60K 15/07, B60K 15/067

(54) **TANKBEHÄLTERSYSTEM UND SYSTEM ZUR AUFNAHME EINES SOLCHEN TANKBEHÄLTERSYSTEMS**
TANK CONTAINER SYSTEM AND SYSTEM FOR RECEIVING SUCH A TANK CONTAINER SYSTEM
SYSTÈME DE RÉSERVOIR ET SYSTÈME DE RÉCEPTION D'UN TEL SYSTÈME DE RÉSERVOIR

(43) Veröffentlichungstag der Anmeldung: 04.03.2026
(73) Patentinhaber: NPROXX B.V., 6422 RK Heerlen (NL)
(72) Erfinder: Holz, Arne, 52224 Stolberg (DE)
(74) Vertreter: Heuking Kühn Lüer Wojtek PartGmbB

(56) Entgegenhaltungen:
- WO-A1-2024/088761
- WO-A1-2024/223823
- US-A1- 2023 408 039
- US-B2- 10 864 859

## Beschreibung

### Gebiet der Erfindung

Die Erfindung betrifft ein Tankbehältersystem, insbesondere für Druck- und ganz besonders für Hochdrucktankbehälter für die Speicherung eines gasförmigen Treibstoffs für den Antrieb eines Fahrzeugs. Weiter betrifft die Erfindung ein System zur Aufnahme eines solchen Tankbehältersystems, ein Fahrzeug mit einem solchen Tankbehältersystem sowie ein Verfahren zum Ausrüsten des Fahrzeugs mit einem solchen Tankbehältersystem.

### Hintergrund der Erfindung

In den letzten Jahren ist das Interesse an der Verwendung alternativer Kraftstoffe in der Fahrzeugindustrie enorm gestiegen. Aus diesem Grund kommen immer mehr Fahrzeuge, die durch gasförmige Kraftstoffe wie Erdgas, Autogas oder Wasserstoff angetrieben werden, auf den Markt. Insbesondere ist der Einsatz nicht fossiler Energieträger, hier in erster Linie Wasserstoff, der beispielsweise mittels Elektrolyse aus Wasser gewonnen wird, in den Fokus des Interesses gerückt. Dies bezieht sich auf alle möglichen Fahrzeuge, wie Kraftfahrzeuge, hier insbesondere Nutzfahrzeuge, wie beispielsweise Busse, Lastkraftwagen oder leichte Nutzfahrzeuge, auch Vans genannt, Arbeitsmaschinen oder auch schienengebundene Fahrzeuge, als auch auf Wasserfahrzeuge, Luftfahrzeuge und Raumfahrzeuge. Der Antrieb des Fahrzeugs kann dabei mit einer Wasserstoffverbrennungsmaschine oder elektrisch erfolgen, wobei über eine Brennstoffzelle der elektrische Strom für die Elektromaschine aus dem mitgeführten Wasserstoff gewonnen wird.

Im Stand der Technik ist es beispielsweise für wasserstoffbetriebene Busse, insbesondere Eindecker, bekannt, ein Tanksystem auf dem Dach des Busses zu platzieren. Würde beispielsweise ein Doppeldeckerbus mit einem solchen dachmontierten Tanksystem zu hoch werden, kann das Tanksystem auch an anderer Stelle, beispielsweise unterflur oder am Fahrzeugheck montiert werden. Ein solches Wasserstofftanksystem kann beispielsweise die eigentlichen H₂-Tank-Module, d.h. ein oder üblicherweise mehrere Drucktankbehälter, auch in verschiedene Größen, eine Ventilbox mit beispielsweise Filtern, elektrischen Ventilen, Druckminderer, mechanischen Ventile, ein Tanksteuergerät mit Kabelbaum, eine Betankungseinheit und eine Tankstellen Interface Einheit aufweisen. Um eine geforderte Reichweite zwischen notwendigen Tankstopps zu erreichen, ist es erforderlich, größere Mengen von Wasserstoff, beispielsweise 1.600 I bis zu 2.560 I oder mehr vorzuhalten. Dazu müssen zumeist mehrere Drucktankbehälter mitgeführt werden, wobei auch bei Eindeckerbussen die Aufbauhöhe möglichst gering sein soll. Solche Eindeckerbusse werden vielerorts im öffentlichen Personennahverkehr eingesetzt und müssen beispielsweise auch durch niedrige Unterführungen fahren. Weiterhin besteht die Forderung nach einem möglichst geringen Gewicht eines solchen Tanksystems. Einerseits soll das Leergewicht des betriebsbereiten Fahrzeugs und damit dessen Energieverbrauch möglichst gering sein, andererseits soll aber auch der Schwerpunkt zumindest bei Land- und Seefahrzeugen möglichst tief liegen, um die Fahrstabilität zu steigern. Insbesondere bei einem auf dem Dach eines Fahrzeugs positionierten Tanksystem muss daher das Eigengewicht des Tanksystems möglichst gering sein.

Gegenwärtig benutzte zylinderförmige Hochdruckbehälter besitzen eine Verstärkungsschicht aus Faserverbundmaterial aus Fasern eingebettet in einem Matrixmaterial, die als Außenschicht mittels eines Wickelverfahrens auf einen Innenbehälter (den sogenannten Liner) des Hochdruckbehälters, der als Wickelkern fungiert, aufgewickelt wird. Während der Innenbehälter beispielsweise die Gasdichtigkeit des Hochdruckbehälters garantiert, verleiht die Verstärkungsschicht aus Faserverbundmaterial dem Hochdruckbehälter die notwendige mechanische Stabilität. Bei Hochdruckbehältern vom Typ III besteht der Liner aus Metall, beispielsweise einer Aluminiumlegierung, bei Hochdruckbehältern vom Typ IV besteht der Liner aus Kunststoff und weist damit ein noch geringeres Eigengewicht auf.

Der maximale Betriebsdruck insbesondere bei der Befüllung eines Hochdruckbehälters bzw. Hochdruckbehältersystems mit Wasserstoff kann je nach Anwendung beispielsweise zwischen 200 und 1200 bar, typischerweise zwischen 350 bar bei Nutzfahrzeugen und 700 bar bei Personenkraftwagen und leichten Nutzfahrzeugen, betragen. Bei Nutzfahrzeugen steht üblicherweise mehr Platz für ein Tanksystem zur Verfügung, so dass mehr Tankvolumen untergebracht werden kann und der Wasserstoffvorrat auch bei dem geringeren Tankinnendruck für ansprechende Reichweiten zwischen Tankstopps ausreicht. Dabei besteht ein Hochdruckbehältersystem aus einer Mehrzahl einzelner Hochdruckbehälter, wobei die einzelnen Hochdruckbehälter üblicherweise aus einer gemeinsamen Hauptleitung befüllt werden, wodurch in den einzelnen Hochdruckbehältern derselbe Innendruck herrscht.

Aus der US-amerikanischen Patenschrift US 10,864,859 B2 ist ein Trägersystem für Drucktankbehälter für die Montage an einer Heckpartie eines Nutzfahrzeugs, insbesondere eines Müllsammelfahrzeugs, bekannt. Dabei können mehrere Drucktankbehälter in dem Trägersystem montiert werden, wobei die Mittelachsen der mehreren Drucktankbehälter sich nicht in einer Ebene befinden müssen, sondern sich einer beispielsweise gewölbten Heckpartie anpassen.

Aus der deutschen Patentschrift DE 102 06 502 C1 ist ein Druckgastank mit mehreren Behältern bekannt. Um Leckageprobleme und hohe Kosten aufgrund einer hohen Systemkomplexität zu minimieren, wird ein allen Gasbehältern gemeinsames Absperrventil vorgeschlagen, wobei Entnahmeteile Öffnungen aufweisen, die in eine Verbindungsschiene hineinragen, wobei eine Stützschiene und die Verbindungsschiene einen Halterahmen für die Gasbehälter bilden.

Aus der US-amerikanischen Offenlegungsschrift US 2023 / 408039 A1 ist eine Wasserstofftank-Tragvorrichtung bekannt, die einen Wasserstoffspeichertank; einen Rahmenabschnitt, auf dem der Wasserstoffspeichertank sitzt; und einen Gleitblockabschnitt, der so konfiguriert ist, dass er einen Düsenabschnitt des Wasserstoffspeichertanks am Rahmenabschnitt befestigt, wobei der Gleitblockabschnitt einen unteren Blockabschnitt, der am Rahmenabschnitt befestigt ist, einen oberen Blockabschnitt, der auf konkav-konvexe Weise mit dem unteren Blockabschnitt gekoppelt ist, sodass die Bewegung des Wasserstoffspeichertanks in einer Längsrichtung und einer Breitenrichtung des Wasserstoffspeichertanks begrenzt ist, und einen Gleitkugelabschnitt, der so konfiguriert ist, dass er eine äußere Seitenfläche des Düsenabschnitts umgibt, zwischen dem unteren Blockabschnitt und dem oberen Blockabschnitt angeordnet ist und so konfiguriert ist, dass er den Düsenabschnitt drehbar stützt.

Aus der internationalen Patentanmeldung WO 2024 / 223823 A1 ist eine Vorrichtung zur Befestigung eines zur Aufnahme eines unter Druck stehenden Gases vorgesehenen Tanks für ein Kraftfahrzeug bekannt. Die Vorrichtung umfasst ein Trägerelement, das aus einem einzigen zugeschnittenen und gefalteten Metallblechelement besteht und Folgendes umfasst: einen Aufnahmebereich, der durch die Kanten eines in einem mittleren Bereich des Metallblechs ausgebildeten Ausschnitts begrenzt ist und zur Aufnahme eines Endhalses des Druckgastanks konfiguriert ist; und einen Körper, der mit zwei gegenüberliegenden Verstärkungswänden versehen ist, die durch Falten des Metallblechs erhalten werden und sich im Wesentlichen in einer Ebene quer zur Achse (X) erstrecken, entlang der sich der Tank erstreckt. Die Vorrichtung umfasst außerdem einen Haltekragen, der an dem Trägerelement befestigt ist, wobei der Aufnahmebereich und der Haltekragen zwischen sich eine Durchgangsöffnung begrenzen, die dazu ausgebildet ist, den Endhals des Tanks aufzunehmen.

Wasserstofftanksysteme, beispielsweise im Busbereich, werden in kleinen Stückzahlen von meist 1 bis 50 Systemen pro Los bestellt. Obwohl die Systemarchitekturen für die verschiedenen Anwendungen sehr ähnlich sind, kann ein gemeinsames Design aufgrund von im Detail unterschiedlichen Kundenanfragen nicht erreicht werden. Derzeitige Konstruktionen sind als kundenindividuelle Metall-, zumeist Stahlrahmen ausgeführt. Kleine Stückzahlen und individuelle Kundenanforderungen treiben die Systemkosten bei Stückpreis und Verwaltung sowie die Vorlaufzeit vom Designstart bis zum Produktionsbeginn.

### Zusammenfassung der Erfindung

Der hier vorliegenden Erfindung liegt die Aufgabe zugrunde, den Stand der Technik zu verbessern. Insbesondere ist es Aufgabe der Erfindung, ein Tankbehältersystem, insbesondere für Druck- und ganz besonders für Hochdrucktankbehälter für die Speicherung eines gasförmigen Treibstoffs für den Antrieb eines Fahrzeugs anzugeben, das flexibel aufgebaut ist und Kosten und Durchlaufzeit auch bei kleinen Stückzahlen minimiert. Weiter betrifft die Erfindung ein System zur Aufnahme eines solchen Tankbehältersystems, ein Fahrzeug mit einem solchen Tankbehältersystem sowie ein Verfahren zum Ausrüsten des Fahrzeugs mit einem solchen Tankbehältersystem.

Nach einem ersten Aspekt löst die gestellte Aufgabe ein Tankbehältersystem zur Montage an einem Fahrzeug, das einen Tankbehälter und einen ersten und einen zweiten Träger aufweist, wobei der erste und der zweite Träger Halterungen für den Tankbehälter aufweisen, wobei die Halterungen jeweils paarweise ausgeführt sind, wobei jeweils eine erste Halterung eines jeden Halterungspaars an dem ersten Träger und eine zweite Halterung eines jeden Halterungspaars an dem zweiten Träger befindet, wobei jedes Halterungspaar jeweils ein Loslager und ein Festlager aufweist. Die Halterungen sind austauschbar ausgeführt, wobei der erste Träger und der zweite Träger jeweils eine Vorrichtung aufweisen, in der die erste Halterung und die zweite Halterung in Längsrichtung des jeweiligen Trägers verschiebbar und fixierbar gelagert sind. Dabei sind der erste Träger und der zweite Träger jeweils als Strangpressprofil ausgeführt, wobei die Vorrichtung jeweils als in Längsrichtung (y) des jeweiligen Trägers durchgehende Nut ausgeführt ist, wobei die erste Halterung und die zweite Halterung jeweils mittels eines in der Nut geführten Nutsteins und einer Klemmschraube an jeder beliebigen Stelle in Längsrichtung (y) des jeweiligen Trägers fixierbar ist

Begrifflich sei hierzu Folgendes erläutert:
Zunächst sei ausdrücklich darauf hingewiesen, dass im Rahmen der hier vorliegenden Patentanmeldung unbestimmte Artikel und Zahlenangaben wie "ein", "zwei" usw. im Regelfall als "mindestens"-Angaben zu verstehen sein sollen, also als "mindestens ein... ", "mindestens zwei... " usw., sofern sich nicht aus dem jeweiligen Kontext ausdrücklich ergibt oder es für den Fachmann offensichtlich oder technisch zwingend ist, dass dort nur "genau ein... ", "genau zwei... " usw. gemeint sein können. Weiterhin sind alle Zahlenangaben sowie Angaben zu Verfahrensparametern und/oder Vorrichtungsparametern im technischen Sinne zu verstehen, d.h. als mit den üblichen Toleranzen versehen zu verstehen. Auch aus der expliziten Angabe der Einschränkung "wenigstens" oder "mindestens" o.ä. darf nicht geschlossen werden, dass bei der einfachen Verwendung von "ein", also ohne die Angabe von "wenigstens" o.ä., ein "genau ein" gemeint ist.

Unter einem **Tankbehältersystem** wird hier ein System mit mindestens einem Tankbehälter in einer Halterung montiert auf einem **Trägersystem** mit mindestens zwei schienenförmigen Trägern verstanden, wobei das Tankbehältersystem an einem Fahrzeug montierbar ist. Das Fahrzeug kann dabei ein Land-, See- oder Luftfahrzeug sein. Insbesondere kann das Fahrzeug ein Nutzfahrzeug für den Personentransport, insbesondere ein Eindeckerbus sein, wobei das Tankbehältersystem auf dem Dach des Eindeckerbusses montierbar ist. Unter einem Tankbehälter wird hier jeder Behälter verstanden, der zur Aufnahme und Abgabe eines Kraftstoffs geeignet ist, wobei der Tankbehälter wiederbefüllbar ist. Insbesondere ist der Tankbehälter als Druckbehälter, insbesondere Hochdruckbehälter für die Aufnahme eines gasförmigen Kraftstoffs, beispielsweise Wasserstoff, ausgeführt. Wasserstoff für die Verwendung als Kraftstoff in einem Fahrzeug kann dabei in einer Verbrennermaschine verbrannt werden oder beispielsweise über eine Kraftstoffstelle in elektrischen Strom umgewandelt werden, mit dem anschließend ein elektrischer Motor mit Energie versorgt werden kann, um das Fahrzeug anzutreiben.

Unter einem **Druckbehälter** wird hier jeder geschlossene oder schließbare Behälter mit einem Innenvolumen verstanden, wobei in dem Innenvolumen ein Fluid unter einem Druck höher als der Umgebungsdruck speicherbar ist. Dabei muss es sich nicht um einen einzelnen Behälter handeln. Auch ein miteinander verschaltetes System von mehreren Druckbehältern kann für das erfindungsgemäße Füllsystem bzw. das erfindungsgemäße Verfahren zur Limitierung der Füllrate als ein einzelner Druckbehälter behandelt werden, sofern die mehreren Druckbehälter an derselben Hauptleitung angeschlossen sind, wobei in diesem Fall in allen Druckbehältern derselbe Innendruck herrscht. Insbesondere wird unter einem **Hochdruckbehälter** ein Druckbehälter verstanden, in dessen Innenvolumen ein Fluid unter einem Druck, der mindestens zwei Größenordnungen höher als der Umgebungsdruck ist, speicherbar ist. Üblich für die Speicherung von Wasserstoff in Hochdruckbehältern für Busse ist beispielsweise ein Maximaldruck von 350 bar bei City Bussen. Bei Reisebussen, Kleinbussen und Vans ist ein Speicherdruck von 700 bar üblich. Insbesondere stellt ein Druckbehälter Typ 4 einen solchen Hochdruckbehälter dar, wobei ein solcher Druckbehälter einen Innenbehälter aus Kunststoff, der beispielsweise die Gasdichtigkeit des Druckbehälters garantiert, und eine Verstärkungsschicht aus einem Faserverbundmaterial aufweist, die dem Druckbehälter die notwendige mechanische Stabilität verleiht. Bei dem Fluid kann es sich um ein Gas handeln, insbesondere um Wasserstoff. Ist im Folgenden von einem Hochdruckbehälter die Rede, soll hierunter auch ein System von Hochdruckbehältern verstanden sein.

Ein **Halterungspaar** besteht aus zwei einzelnen Halterungen. Ein Druckbehälter wird in einem Halterungspaar gehaltert, wobei ein Halter eines Halterungspaar als Festlager und der andere Halter des Halterungspaars als Loslager ausgeführt ist. Die Halter haltern üblicherweise die beiden Endseiten der üblicherweise zylinderförmigen Druckbehälter. Das Festlager legt dabei die Position des einen Endes des Druckbehälters in allen drei Raumdimensionen fest, während das Loslager nur zwei Raumdimensionen festlegt, während sich der Druckbehälter innerhalb des Loslagers in Richtung seiner Längsachse ausdehnen kann. Diese Ausdehnungsmöglichkeit wirkt Spannungsspitzen bei der sowohl thermischen als auch Fülldruck bedingten Ausdehnung des Druckbehälters entgegen.

Unter einer **Vorrichtung zur verschieb- und fixierbaren Lagerung einer Halterung** ist hier eine Einrichtung in einem Träger zu verstehen, in der eine Halterung in Richtung der Längsachse des Trägers verschiebbar gelagert ist, wobei sie an gewünschten Stellen des Trägers fixierbar ist. Mit anderen Worten verhindert die Fixierung ein weiteres Verschieben der Halterung in der Vorrichtung. Eine solche Fixierung kann durch das Herbeiführen eines Form- oder Kraftschlusses zwischen der Halterung und dem Träger an einer betreffenden Stelle des Trägers hergestellt werden. Beispiele sind ein Verstiften, ein Verschrauben, o.ä. Dabei können die Fixierungsorte vorbestimmt sein, indem beispielsweise an diesen Stellen Gewindebohrungen in dem Träger vorgesehen sind. Beispielsweise durch das Herstellen eins Kraftschlusses, indem beispielsweise eine Schraube in einen Halter eingedreht wird, die gegen den Träger wirkt, kann die Fixierung aber auch an jeder beliebigen Stelle des Trägers erfolgen.

Unter einem **Kanal** wird hier ein in sich in Längsrichtung eines Trägers erstreckender rohrförmiger Hohlraum verstanden.

Unter einem **Grundrahmen** wird hier ein rahmenförmiges Gebilde verstanden, an dem verschiedene Komponenten, insbesondere das Tankbehältersystem, befestigbar ist und das seinerseits an einem Fahrzeug befestigbar ist. Der Grundrahmen kann eine **Standardfahrzeugschnittstelle** aufweisen. An dieser Schnittstelle wird die lasttragende Fahrzeugstruktur mit dem Grundrahmen über eine individuelle Lagerkonstruktion mit dem Grundrahmen verbunden.

Darüber hinaus kann die standardisierte Schnittstelle für die Kraftstoffversorgung des Fahrzeugmotors beziehungsweise der Brennstoffzelle und für den Austausch elektrischer Signale sowie für eine Spannungsversorgung eingerichtet sein.

Unter dem Begriff **Systemmodul** soll hier ein Modul verstanden werden, aus denen ein System aufgebaut ist. Beispielsweise gehören zu den Systemmodulen zur Aufnahme eines Tankbehältersystems neben dem Tankbehältersystem selbst eine Ventilbox, ein Tankbehältermodul, ein Tanksteuergerät, eine Betankungseinheit und eine Tankstellen-Interface-Einheit sowie einen Grundrahmen, an dem die Systemmodule befestigbar sind und der eine Standardfahrzeugschnittstelle aufweisen kann. Ein Tankbehältermodul kann dabei einen Tankbehälter mit einem sogenannten on-Tank-Valve (OTV) und/oder einer thermischen Druckentlastung (TPRD) bezeichnen.

Unter dem Begriff **Auslegung** wird hier die Dimensionierung von Bauteilen, beispielsweise die volumetrische Dimensionierung des Tankbehältersystems, verstanden.

Der oder die Tankbehälter werden ausgelegt und an den ersten und zweiten Träger montiert. Dabei werden standardisierte Trägerhalbzeuge, aus einem Strangpressprofil, verwendet, die durch einfaches Ablängen an die individuellen Bedürfnisse des jeweiligen Fahrzeugs anpassbar sind. Die einzelnen Tankbehälter können dabei beispielsweise unterschiedliche Durchmesser oder Positionen aufweisen und dennoch möglichst eng, d.h. platzsparend, zueinander auf den Trägern montiert werden, da sie in Halterungen montiert werden, die in den Trägern verschiebbar gelagert sind. Durch diese Konfiguration können Rohteile wie Träger und Gefäßhalterung in hohen Stückzahlen auf Lager gefertigt werden, auch wenn die genauen Kundenwünsche nicht bekannt sind. Die Zeit für die kundenspezifische Individualisierung und die Maschinenzeit für jedes Teil wird reduziert. Erfindungsgemäß ist die Vorrichtung, in der die erste Halterung und die zweite Halterung in Längsrichtung des jeweiligen Trägers verschiebbar und fixierbar gelagert sind, als Nut in dem ersten und/oder zweiten Träger ausgeführt. Die Nut ist beispielsweise in einem Strangpressprofil einfach zu realisieren. Die Halterungen sind mit einem Nutstein versehen, so dass sie einfach in die Nut einschiebbar und in ihr verschiebbar sind. Die Fixierung wird durch eine Klemmschraube realisiert.

In einer vorteilhaften Ausführungsform ist eine Mehrzahl von Tankbehältern auf den Trägern montiert, wobei sich die Längsachsen der Mehrzahl von Tankbehältern in einer durch die Längsrichtung x der Mehrzahl von Tankbehältern und der Längsrichtung y der Träger aufgespannten Ebene befinden. Mit anderen Worten befinden sich alle Tankbehälter in dieser Ausführungsform in einer Ebene. Sind die Tankbehälter beispielsweise auf dem Dach eines Fahrzeugs montiert, befinden sich alle Tankbehälter in einer horizontalen Ebene. Die Halter sind also in dieser Ausführungsform identisch, was die Anzahl der vorzuhaltenden unterschiedlichen Halbzeuge minimiert und somit zu einer Kostenersparnis beiträgt.

In einer alternativen vorteilhaften Ausführungsform ist eine Mehrzahl von Tankbehältern auf den Trägern montiert, wobei sich in Längsrichtung y der Träger unterschiedlich in senkrechter Richtung zu den Längsachsen der Träger y und den Längsachsen x von an den Trägern befestigbaren Tankbehältern ausgedehnte Halterungen befinden. Dadurch können die montierten Tankbehälter in unterschiedlichen, beispielsweise sich teilweise überlappenden Höhen montiert werden, wodurch bei zylinderförmigen Tankbehältern Montageplatz in Längsrichtung der Träger reduziert wird. Dabei können sich die auf den Trägern montierten Tankbehälter in zwei sich jeweils abwechselnden Höhen in Höhenrichtung z der Halterungen oder sich in einer in Höhenrichtung z der Halterungen ausdehnten W-Form oder sich in einer in Höhenrichtung z der Halterungen ausdehnten halbrunden oder elliptischen Form befinden. Die Auswahl der Form kann in vorteilhafter Weise von der Form des Bereichs des Fahrzeugs abhängig gemacht werden, in dem die Tankbehälter montiert werden sollen, um so den Bauraum fahrzeugspezifisch zu maximieren.

In einer weiteren vorteilhaften Ausführungsform des Tankbehältersystems ist in dem ersten Träger und/oder in dem zweiten Träger ein Kanal integriert. Dieser Kanal kann als Sammler für Entlüftungsleitungen oder als Hochdruckleitung der einzelnen Tankbehälter dienen. Im Falle der Entlüftungsleitung können an beispielsweise kundenspezifischen Stellen eine oder mehrere Kammern an diesen Kanal angeschlossen, um Gas nach außen zu leiten. Im Falle der Hochdruckleitung dient der Kanal als Sammelleitung für die Entnahme des Kraftstoffs aus den Tankbehältern beziehungsweise als Sammelleitung für die Befüllung der Tankbehälter. In beiden Fällen kann auf die Verlegung einer separaten Leitung verzichtet werden, was denn das Tankbehältersystem vereinfacht, indem separate Teile eingespart werden. Darüber hinaus wird der Montageaufwand vereinfacht, da weniger Teile, hier die jeweilige separate Leitung, verlegt und befestigt werden müssen.

In einer weiteren vorteilhaften Ausführungsform des Tankbehältersystems ist der Kanal als Sacklochbohrung durch den Träger ausgeführt, wobei das offene Ende des Kanals ein Innengewinde aufweist, in das eine Schraube einschraubbar ist. Diese Schraube kann zusätzliche Montagehalterungen halten. Gleichzeitig verschließt die Schraube die Kanalenden, um ein Entweichen von Wasserstoff zu verhindern. Im Falle einer Hochdruckleitung kann an kundenspezifischen Stellen eine Verbindung zu anderen Komponenten des Systems hergestellt werden, die den Kraftstoff zur Verwendung führen. In einer alternativen Ausführungsform des Tankbehältersystems ist der Kanal als Durchgangsbohrung durch den Träger ausgeführt, wobei beide offenen Enden des Kanals Innengewinde aufweisen, in die Schrauben einschraubbar sind. Diese Schrauben können zusätzliche Montagehalterungen halten. Gleichzeitig verschließen die Schrauben die Kanalenden, um ein Entweichen von Wasserstoff zu verhindern. Auch hier kann im Falle einer Hochdruckleitung an kundenspezifischen Stellen eine Verbindung zu anderen Komponenten des Systems hergestellt werden, die den Kraftstoff zur Verwendung führen. Ist der Kanal als Durchgangsbohrung ausgeführt, kann ein Endlosprofil als Halbzeug für die Träger verwendet werden, das individuell abgelängt wird, was zur weiteren Einsparung von vorzuhaltenden Halbzeugen führt.

In einer weiteren vorteilhaften Ausführungsform sind der erste und der zweite Träger dazu eingerichtet, mit ihrer Längsrichtung in Fahrtrichtung eines Fahrzeugs auf dem Fahrzeug montierbar zu sein. Durch diese Montagerichtung sind die Tankbehälter im Wesentlichen quer zur Fahrtrichtung des Fahrzeugs ausgerichtet, was beispielsweise bei einem Frontalcrash des Fahrzeugs zu einer geringeren Belastung der Lager und der Halter führt. Des Weiteren kann durch eine derartige Montage vorhandener Bauraum je nach Fahrzeug besser für ein Tanksystem ausgenutzt werden.

In einer alternativen Ausführungsform sind der erste und der zweite Träger dazu eingerichtet, mit ihrer Längsrichtung quer zur Fahrtrichtung eines Fahrzeugs auf dem Fahrzeug montierbar zu sein. Durch diese Montagerichtung sind die Tankbehälter im Wesentlichen längs zur Fahrtrichtung des Fahrzeugs ausgerichtet, wodurch längere Tankbehälter verbaubar sind, so dass vorhandener Bauraum je nach Fahrzeug besser ausgenutzt werden kann beziehungsweise durch das Verbauen längerer Tankbehälter das Tankvolumen vergrößerbar ist, wobei ein größere Tankbehälter finanziell günstiger ist als eine Mehrzahl kleiner Tankbehälter mit in Summe dem gleichen Speichervolumen.

In einer weiteren vorteilhaften Ausführungsform sind der erste und der zweite Träger dazu eingerichtet, Tankbehälter verschiedener Längenausdehnung aufzunehmen. Damit ist es möglich, die Menge von mitgeführtem Kraftstoff besser an den für das Fahrzeug beziehungsweise seinen Einsatz anzupassen. Um kürzere als maximal lange Behälter aufnehmen zu können, können beispielsweise Aufnahmeadapter verwendet werden.

Nach einem weiteren Aspekt löst die gestellte Aufgabe ein System gemäß Anspruch 10 zur Aufnahme des erfindungsgemäßen Tankbehältersystems, wobei das System zusätzlich eine Ventilbox, ein Tanksteuergerät, eine Betankungseinheit und eine Tankstellen-Interface-Einheit aufweist, wobei das System zusätzlich einen Grundrahmen aufweist, an dem das Tankbehältersystem, die Ventilbox, das Tanksteuergerät, die Betankungseinheit und die Tankstellen-Interface-Einheit befestigbar sind und wobei der Grundrahmen eine Standardfahrzeugschnittstelle aufweist. Durch die Verwendung des Grundrahmens lässt sich die vorzuhaltende Menge an verschiedenen Komponenten für ein Gesamtsystem verringern sowie Montageaufwand einsparen. Insbesondere können die einzelnen Einheiten oder Module vormontiert werden. Auch kann das gesamte System in einem Arbeitsgang an einem Fahrzeug montiert werden, wodurch sich der Montageaufwand weiter reduzieren kann.

Nach einem weiteren Aspekt löst die gestellte Aufgabe ein Fahrzeug gemäß Anspruch 11 mit einem erfindungsgemäßen Tankbehältersystem, wobei an dem Tankbehältersystem ein oder mehrere Tankbehälter befüllt mit gasförmigem Triebstoff für einen Antrieb des Fahrzeugs montiert sind. Damit kann das Fahrzeug mit einem flexibel aufgebauten Tankbehältersystem, insbesondere für Druck- und ganz besonders für Hochdrucktankbehälter, mittels Speicherung und Bereitstellung eines gasförmigen Treibstoffs angetrieben werden, wobei Kosten und Durchlaufzeit bei der Montage auf dem Fahrzeug auch bei kleinen Stückzahlen minimiert werden.

Nach einem weiteren Aspekt löst die gestellte Aufgabe ein Verfahren gemäß Anspruch 12 zum Ausrüsten eines Fahrzeugs mit dem erfindungsgemäßen System zur Aufnahme des erfindungsgemäßen Tankbehältersystems, an dem ein oder mehrere Tankbehälter befüllt oder zu befüllen mit gasförmigem Triebstoff für einen Antrieb des Fahrzeugs montiert werden. Das Verfahren beinhaltet die Schritte:
a. Beschaffung und Bevorratung der System-Halbzeuge, beispielsweise Rohprofile der Träger. Vormontage von Systemmodulen, beispielweise Ventilbox und Tankbehälter Modul.
b. Auslegen der Tankbehälter gemäß der geforderten Fahrzeugspezifikation, Auslegen von erstem und zweiten Träger sowie der Halterpaare des Tankbehältersystems, Auslegen von Ventilbox, Tanksteuergerät, Betankungseinheit und Tankstellen-Interface-Einheit; gegebenenfalls Auslegung von zusätzlichen Strukturteilen zur Befestigung an den Trägern
c. Auslegen des Grundrahmens;
d. Bearbeitung der System-Halbzeuge, beispielsweise erstem und zweiten Träger, sowie der Halterpaare des Tankbehältersystems und Beschaffung von Tankbehältern, von Ventilbox, Tanksteuergerät, Betankungseinheit und Tankstellen-Interface-Einheit sowie des Grundrahmens;
e. Montage des Grundrahmens und Montage der Tankbehälter am Grundrahmen
f. Montage von Ventilbox, Tanksteuergerät, Betankungseinheit und Tankstellen-Interface-Einheit an dem Grundrahmen
g. Montage des Tanksystems an dem Fahrzeug.

Das Verfahren berücksichtigt dabei, dass die bei heutiger, konventioneller Erstellung eines Systems zur Versorgung eines Fahrzeugs mit einem alternativen Kraftstoff wie beispielsweise Wasserstoff benötigten individuellen Bauteile als Halbzeuge vorliegen und erfindungsgemäß die Individualisierung durch einfache Herstellschritte wie einem einfachen Ablängen eines Halbzeugs und einer standardisierten Montage weiterer standardisierter Module beziehungsweise Geräte erfolgt. Hierdurch sind Aufwand sowohl bei der Teilebevorratung als auch bei der Erstellung des Systems minimierbar. Ein Tankbehältermodul kann dabei einen Tankbehälter mit einem sogenannten on-Tank-Valve (OTV) und/oder einer thermischen Druckentlastung (TPRD) umfassen.

Weitere Vorteile, Besonderheiten und zweckmäßige Weiterbildungen der Erfindung ergeben sich aus den Unteransprüchen und der nachfolgenden Dellung bevorzugter Ausführungsbeispiele anhand der Abbildungen.

Es zeigen
- **Fig.1:**: eine Prinzipskizze einer Seitenansicht eines erfindungsgemäßen Tankbehältersystems; Es werden exemplarisch verschiedene Behälterpositionskonfigurationen a. bis d. gezeigt.
- **Fig.2:**: eine dreidimensionale Ansicht eines Details des erfindungsgemäßen Tankbehältersystems aus Fig. 1;
- **Fig.3:**: eine Prinzipskizze einer Draufsicht eines erfindungsgemäßen Tankbehältersystems;
- **Fig.4:**: eine Prinzipskizze eines Trägerprofilquerschnitts;
- **Fig.5:**: eine Prinzipskizze des erfindungsgemäßen Verfahrens zum Ausrüsten eines Fahrzeugs mit dem System zur Aufnahme des Tankbehältersystems; und
- **Fig.6:**: Prinzipskizzen (a) des erfindungsgemäßen Systems zur Aufnahme eines Tankbehältersystems, und (b) des erfindungsgemäßen Fahrzeugs mit einem solchen Tankbehältersystem.

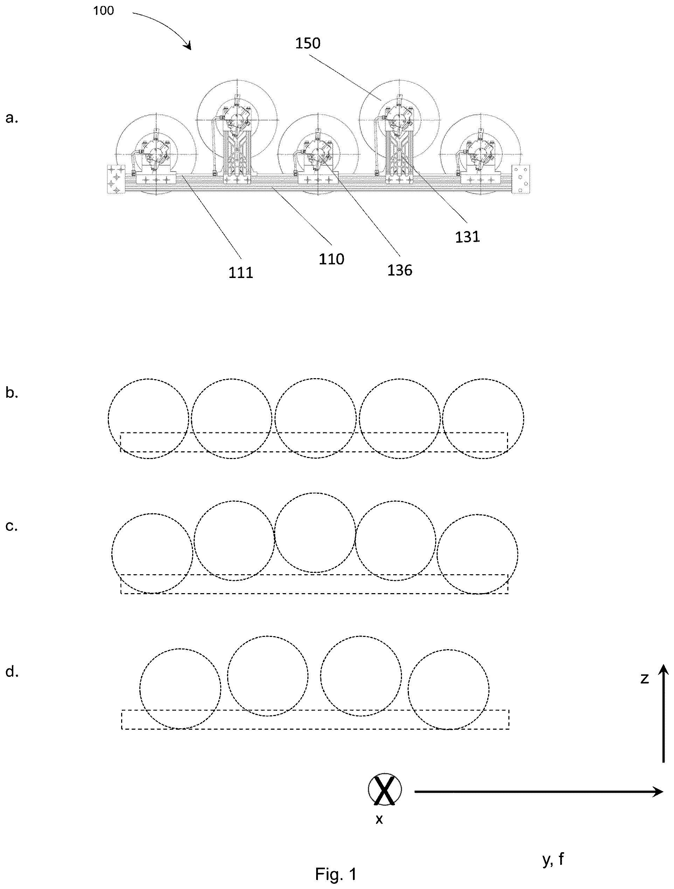

**Fig.1** zeigt eine Prinzipskizze einer Seitenansicht eines erfindungsgemäßen Tankbehältersystems 100. Das Tankbehältersystem weist einen ersten Träger 110 und einen zweiten Träger 120 (in der Fig. nicht zu sehen) auf. Auf den beiden Trägern 110, 120 sind Halterungen 131, 132 in Vorrichtungen 111, 121 montiert, wobei in der Fig.1 nur die Halterungen 131 des ersten Trägers 110 und die Vorrichtung 111 des ersten Trägers 110 zu sehen sind. Die Halterungen 131, 132 haltern Tankbehälter 150. In der dargestellten Ausführungsform weisen die Halterungen 131 auf dem ersten Träger 110 Festlager 136 auf. Die Halterungen 131, 132 für einen Tankbehälter aufweisen, wobei die Halterungen jeweils paarweise ausgeführt sind, wobei jeweils eine erste Halterung eines jeden Halterungspaars an dem ersten Träger und eine zweite Halterung eines jeden Halterungspaars an dem zweiten Träger befindet, wobei jedes Halterungspaar jeweils ein Loslager und ein Festlager aufweist. Die Halterungen sind austauschbar ausgeführt, wobei der erste Träger und der zweite Träger jeweils eine Vorrichtung aufweisen, in der die erste Halterung und die zweite Halterung in Längsrichtung des jeweiligen Trägers verschiebbar und fixierbar gelagert sind. Die Halterungen 131, 132 sind in z-Richtung, d.h. in einer Richtung senkrecht zur der Längsrichtung y der Träger 110, 120 und senkrecht zu der Längsrichtung x der Tankbehälter 150 in zwei unterschiedlichen Höhen ausgeführt, wobei sich die Höhen der Halterungen 131, 132 in Längsrichtung y der Träger abwechseln. Dadurch können die montierten Tankbehälter in unterschiedlichen, beispielsweise sich teilweise überlappenden Höhen montiert werden, wodurch bei zylinderförmigen Tankbehältern Montageplatz in Längsrichtung der Träger reduziert wird. Durch eine maschinelle Bearbeitung kann die Höhe der Halterungen 131 und 132 verändert werden. Dadurch können verschiedenste Behälterpositionen und in Folge verschiedenste Konfigurationen mehrerer Tankbehälter realisiert werden. Exemplarisch werden die Konfigurationen a. bis d. als Prinzipskizzen gezeigt.

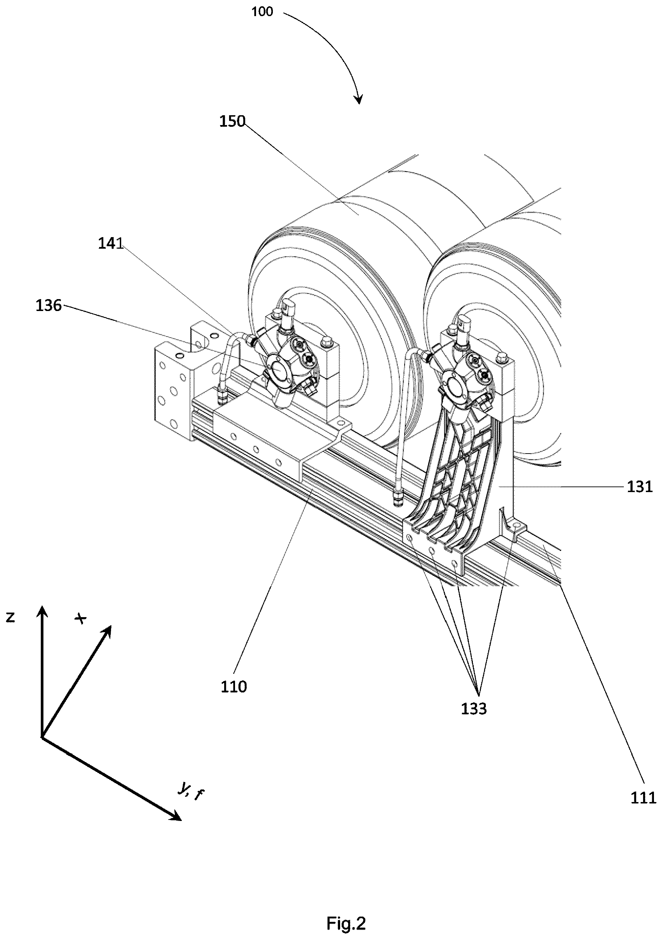

**Fig.2** zeigt eine dreidimensionale Ansicht eines Details des erfindungsgemäßen Tankbehältersystems aus Fig. 1. In der Fig. ist nur ein Teil des ersten Trägers 110 zu sehen. Dieser erste Träger 110 weist eine Vorrichtung 111 in Form einer Schiene auf, auf der die ersten Halter 131 in Längsrichtung des ersten Trägers 110 verschieben lassen. Tankbehälter 150 sind über Festlager 136 mit den ersten Halterungen 131 verbunden. Über Klemmschrauben 133 sind die ersten Halter 131 in Längsrichtung y des ersten Trägers 110 fixierbar. Für den in der Fig. nicht sichtbaren zweiten Träger 120 sieht die Konfiguration analog aus, außer dass die Tankbehälter 150 über Loslager 135 statt über Festlager 136 mit den zweiten Halterungen 132 verbunden sind, so dass jeder Tankbehälter 150 über ein Festlager 136 und ein Loslager 135 mit der jeweiligen ersten Halterung 131 und zweiten Halterung 132 verbunden ist. In dem ersten Träger 110 verläuft ein Kanal 140 (in der Fig. nicht zu sehen), der als Sammelleitung für die Entnahme des Kraftstoffs aus den Tankbehältern 150 beziehungsweise als Sammelleitung für die Befüllung der Tankbehälter 150 dient. Dadurch kann auf die Verlegung einer separaten Hochdruckleitung verzichtet werden, was denn das Tankbehältersystem 100 vereinfacht, indem separate Teile eingespart werden. Darüber hinaus wird der Montageaufwand vereinfacht, da weniger Teile, hier die jeweilige separate Leitung, verlegt werden müssen. Der Tankbehälter 150 ist mit seiner Befüll- beziehungsweise Entnahmeöffnung (in der Fig. nicht sichtbar) über eine Verbindungsleitung 141 mit dem Kanal 140 fluidisch verbunden.

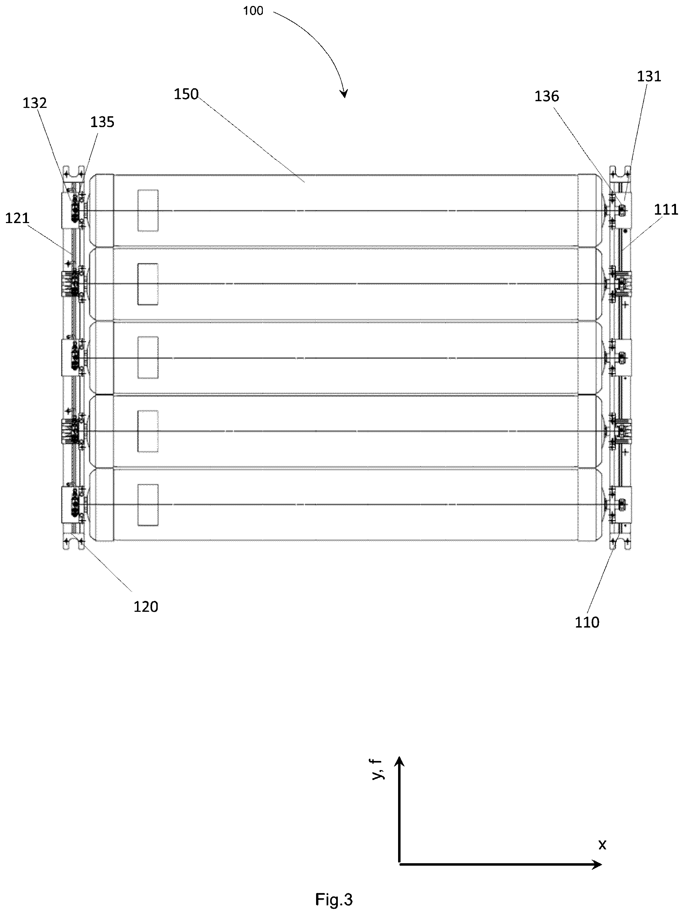

**Fig.3** zeigt eine Prinzipskizze einer Draufsicht eines erfindungsgemäßen Tankbehältersystems 100. In dieser Ausführungsform sind fünf Tankbehälter 150 auf dem ersten Träger 110 und dem zweiten Träger 120 montiert. Dabei sind die Tankbehälter 150 über Festlager 136 in ersten Halterungen 131 und über Loslager 135 in zweiten Halterungen 132 gelagert. Der erste Träger 110 und der zweite Träger 120 sind mit ihrer Längsrichtung y in Fahrtrichtung f eines Fahrzeugs auf dessen Dach montiert. Durch diese Montagerichtung sind die Tankbehälter im Wesentlichen quer zur Fahrtrichtung des Fahrzeugs ausgerichtet, was beispielsweise bei einem Frontalcrash des Fahrzeugs zu einer geringeren Belastung der Lager und der Halter führt.

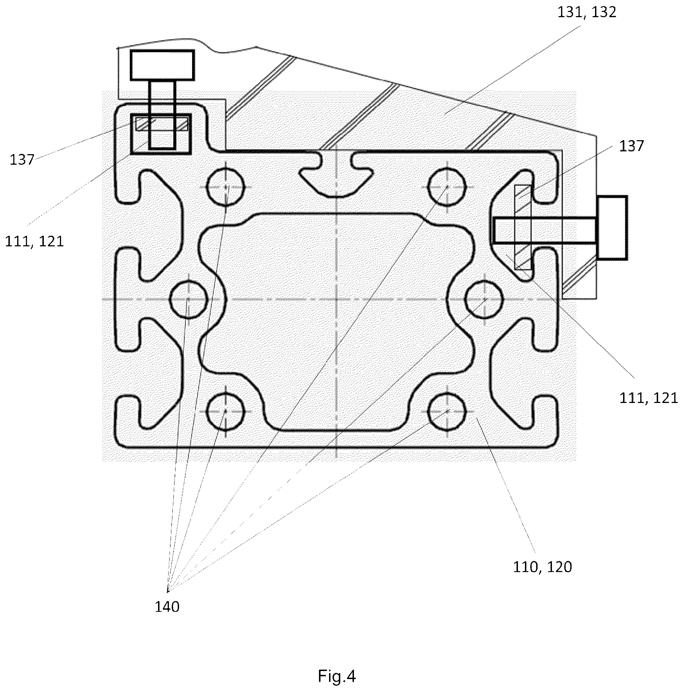

**Fig.4** zeigt eine Prinzipskizze eines Trägerprofilquerschnitts, das als erster Träger 110 und/oder zweiter Träger 120 dient. Das Trägerprofil weist als Vorrichtung 111, 121 Nuten auf, in die die Halterungen 131, 132 mit einem Nutstein 137 einschiebbar und innerhalb der Nuten verschiebbar sind. Weiterhin weist das Trägerprofil in seinem Inneren Kanäle 140 auf, die als Durchgangsbohrung ausgeführt sind. Diese Kanäle 140 können als Sammler für Entlüftungsleitungen oder als Hochdruckleitung der einzelnen Tankbehälter 150 dienen. Im Falle der Entlüftungsleitung können an beispielsweise kundenspezifischen Stellen eine oder mehrere Kammern an den Kanal 140 angeschlossen sein, um Gas nach außen zu leiten. Im Falle der Hochdruckleitung dient der Kanal 140 als Sammelleitung für die Entnahme des Kraftstoffs aus den Tankbehältern 150 beziehungsweise als Sammelleitung für die Befüllung der Tankbehälter 150. In beiden Fällen kann auf die Verlegung einer separaten Leitung verzichtet werden, was das Tankbehältersystem 100 vereinfacht, indem separate Teile eingespart werden. Darüber hinaus wird der Montageaufwand vereinfacht, da weniger Teile, hier die jeweilige separate Leitung, verlegt werden müssen. Die beiden offenen Enden der Kanäle 140 können Innengewinde aufweisen, in die Schrauben einschraubbar sind. Diese Schrauben können zusätzliche Montagehalterungen halten. Gleichzeitig verschießen die Schrauben die Enden des jeweiligen Kanals 140, um beispielsweise ein Entweichen von Kraftstoff zu verhindern. Auch hier kann im Falle einer Hochdruckleitung an kundenspezifischen Stellen eine Verbindung zu anderen Komponenten des Systems hergestellt werden, die den Kraftstoff zur Verwendung führen. Ist der jeweilige Kanal 140 als Durchgangsbohrung ausgeführt, kann ein Endlosprofil als Halbzeug für die Träger 110, 120 verwendet werden, das individuell abgelängt wird, was zur weiteren Einsparung von vorzuhaltenden Halbzeugen führt.

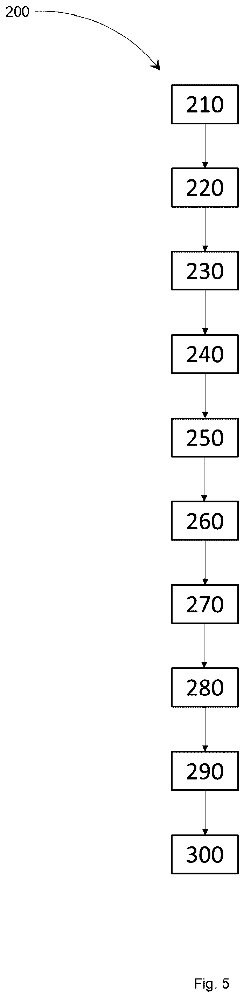

**Fig.5** zeigt eine Prinzipskizze des erfindungsgemäßen Verfahrens 200 zum Ausrüsten eines Fahrzeugs mit dem System 400 zur Aufnahme des Tankbehältersystems. Das Verfahren 200 weist die Schritte der Beschaffung und Bevorratung 210 der System-Halbzeuge und Systemmodule , Vormontage 220 von Systemmodulen, wie beispielweise Ventilbox, Tankbehälter Modul und elektrischen / elektronischen Komponenten; Auslegen 230 der Tankbehälter gemäß der geforderten Fahrzeugspezifikation und Auslegen von erstem und zweiten Träger sowie der Halterpaare des Tankbehältersystems sowie Auslegen von Ventilbox, Tanksteuergerät, Betankungseinheit und Tankstellen-Interface-Einheit; Auslegen 240 des Grundrahmens; Bearbeitung 250 der System-Halbzeuge sowie der Halterpaare des Tankbehältersystems und Zusammenstellen 260 von Tankbehältern, erstem Träger 110 und zweitem Träger 120 sowie der Halterpaare des Tankbehältersystems 100, von Ventilbox, Tanksteuergerät, Betankungseinheit und Tankstellen-Interface-Einheit sowie des Grundrahmens in einem auftragsbezogenen Zwischenlager; Montage 270 des Grundrahmens und Montage 280 der Tankbehälter 150 an dem Grundrahmen; Montage 290 von Ventilbox, Tanksteuergerät, Betankungseinheit und Tankstellen-Interface-Einheit an dem Grundrahmen und Montage 300 des Tankbehältersystems 100 an dem Fahrzeug.

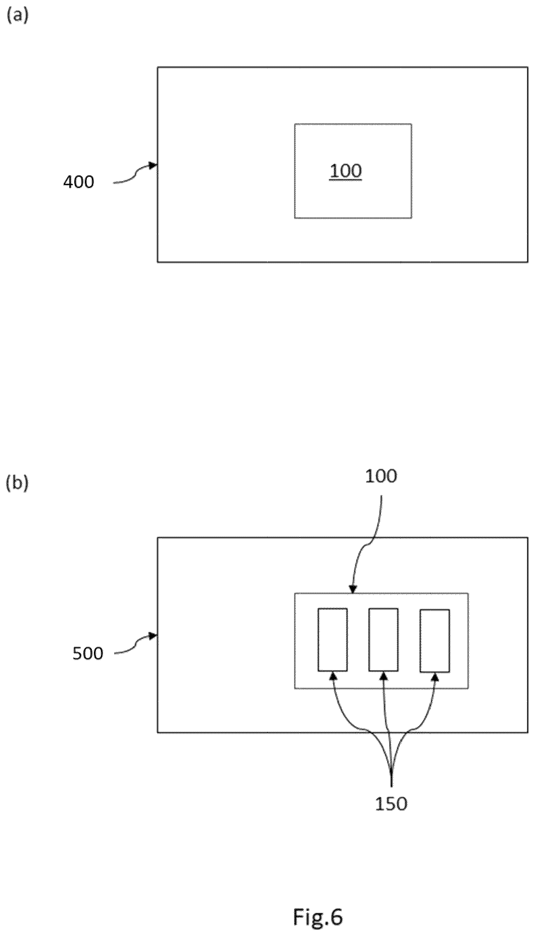

**Fig.6** zeigt in Teil (a) eine Prinzipskizze das erfindungsgemäße System 400 zur Aufnahme eines erfindungsgemäßen Tankbehältersystems 100, wobei das System 400 zusätzlich eine Ventilbox, ein Tanksteuergerät, eine Betankungseinheit und eine Tankstellen-Interface-Einheit aufweist, wobei das System 400 zusätzlich einen Grundrahmen aufweist, an dem das Tankbehältersystem 100, die Ventilbox, das Tanksteuergerät, die Betankungseinheit und die Tankstellen-Interface-Einheit befestigbar sind und wobei der Grundrahmen eine Standardfahrzeugschnittstelle aufweist. In Teil (b) zeigt die eine Prinzipskizze eines erfindungsgemäßen Fahrzeugs 500 mit einem erfindungsgemäßen Tankbehältersystem 100, wobei an dem Tankbehältersystem 100 in der gezeigten Ausführungsform drei Tankbehälter 150 befüllt mit gasförmigem Triebstoff für einen Antrieb des Fahrzeugs 500 montiert sind.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

- 100: erfindungsgemäßes Tankbehältersystem
- 110: erster Träger
- 111: Vorrichtung des ersten Trägers
- 120: zweiter Träger
- 121: Vorrichtung des zweiten Trägers
- 131: erste Halterung eines Halterungspaars
- 132: zweite Halterung eines Halterungspaars
- 133: Klemmschraube
- 135: Loslager
- 136: Festlager
- 137: Nutstein
- 140: Kanal
- 141: Verbindungsleitung vom Tankbehälter zum Kanal
- 150: Tankbehälter

- 200: erfindungsgemäßes Verfahren zum Ausrüsten eines Fahrzeugs mit dem System zur Aufnahme des Tankbehältersystems
- 210: Beschaffung und Bevorratung der System-Halbzeuge und Systemmodule

- 220: Vormontage von Systemmodulen
- 230: Auslegen der Tankbehälter gemäß der geforderten Fahrzeugspezifikation, Auslegen von erstem und zweiten Träger sowie der Halterpaare des Tankbehältersystems, Auslegen von Ventilbox, Tanksteuergerät, Betankungseinheit und Tankstellen-Interface-Einheit
- 240: Auslegen des Grundrahmens

- 250: Bearbeitung der System-Halbzeuge sowie der Halterpaare des Tankbehältersystems
- 260: Zusammenstellen von Tankbehältern, erstem und zweitem Träger sowie der Halterpaare des Tankbehältersystem, von Ventilbox, Tanksteuergerät, Betankungseinheit und Tankstellen-Interface-Einheit sowie des Grundrahmens in einem auftragsbezogenen Zwischenlager
- 270: Montage des Grundrahmens
- 280: Montage der Behälter an dem Grundrahmen;
- 290: Montage von Ventilbox, Tanksteuergerät, Betankungseinheit und Tankstellen-Interface-Einheit an dem Grundrahmen;
- 300: Montage des Tankbehältersystems an dem Fahrzeug

- 400: erfindungsgemäßes System zur Aufnahme eines erfindungsgemäßen Tankbehältersystems

- 500: erfindungsgemäßes Fahrzeug mit einem erfindungsgemäßen Tankbehältersystem

- x: Längsrichtung der Tankbehälter
- y, f: Längsrichtung der Träger und Fahrtrichtung
- z: Höhenrichtung der Halterungen

## Patentansprüche

1. Ein Tankbehältersystem (100) zur Montage an einem Fahrzeug (500), aufweisend einen Tankbehälter (150), wobei der Tankbehälter (150) an den ersten und zweiten Träger montiert ist, einen ersten Träger (110) und einen zweiten Träger (120), wobei der erste Träger (110) und der zweite Träger (120) Halterungen (131, 132) für den Tankbehälter (150) aufweisen, wobei die Halterungen (131, 132) jeweils paarweise ausgeführt sind, wobei jeweils eine erste Halterung (131) eines jeden Halterungspaars an dem ersten Träger (110) und eine zweite Halterung (132) eines jeden Halterungspaars an dem zweiten Träger (120) befindet, wobei jedes Halterungspaar jeweils ein Loslager (135) und ein Festlager (136) aufweist, wobei die Halterungen (131, 132) austauschbar ausgeführt sind, wobei der erste Träger (110) und der zweite Träger (120) jeweils eine Vorrichtung (111, 121) aufweisen, in der die erste Halterung (131) und die zweite Halterung (132) in Längsrichtung (y) des jeweiligen Trägers (110, 120) verschiebbar und fixierbar gelagert sind,
**dadurch gekennzeichnet,**
**dass** als der erste Träger (110) und der zweite Träger (120) standarisierte Trägerhalbzeuge, aus einem Strangpressprofil, verwendet werden, wobei die Vorrichtung (111, 121) jeweils als in Längsrichtung (y) des jeweiligen Trägers (110, 120) durchgehende Nut ausgeführt ist, wobei die erste Halterung (131) und die zweite Halterung (132) jeweils mittels eines in der Nut geführten Nutsteins (137) und einer Klemmschraube (133) an jeder beliebigen Stelle in Längsrichtung (y) des jeweiligen Trägers (110, 120) fixierbar ist.

2. Das Tankbehältersystem (100) gemäß Anspruch 1,
**dadurch gekennzeichnet,**
**dass** eine Mehrzahl von Tankbehältern (150) auf den Trägern (110, 120) montiert sind, wobei sich die Längsachsen der Mehrzahl von Tankbehältern (150) in einer durch die Längsrichtung (x) der Mehrzahl von Tankbehältern (150) und der Längsrichtung (y) der Träger (110, 120) aufgespannten Ebene befinden.

3. Das Tankbehältersystem (100) gemäß einem der Ansprüche 1 bis 2,
**dadurch gekennzeichnet,**
**dass** eine Mehrzahl von Tankbehältern (150) auf den Trägern (110, 120) montiert sind, wobei sich in Längsrichtung (y) der Träger (110, 120) unterschiedlich in senkrechter Richtung zu der Längsrichtung (y) der Träger (110, 120) und der Längsrichtung (x) von an den Trägern (110, 120) befestigbaren Tankbehältern (150) ausgedehnte Halterungen (131, 132) befinden.

4. Das Tankbehältersystem (100) gemäß Anspruch 3,
**dadurch gekennzeichnet,**
**dass** die auf den Trägern (110, 120) montierten Tankbehältern (150) in zwei sich jeweils abwechselnden Höhen in Höhenrichtung (z) der Halterungen (131, 132) oder sich in einer in Höhenrichtung (z) der Halterungen (131, 132) ausdehnten W-Form oder sich in einer in Höhenrichtung (z) der Halterungen (131, 132) ausdehnten halbrunden oder elliptischen Form befinden.

5. Das Tankbehältersystem (100) gemäß einem der vorherigen Ansprüche,
**dadurch gekennzeichnet,**
**dass** in dem ersten Träger (110) und/oder in dem zweiten Träger (120) mindestens ein Kanal (140) integriert ist.

6. Das Tankbehältersystem (100) gemäß Anspruch 5,
**dadurch gekennzeichnet,**
**dass** der Kanal (140) als Sacklochbohrung durch den Träger (110, 120) ausgeführt ist, wobei das offene Ende des Kanals (140) ein Innengewinde aufweist, in das eine Schraube einschraubbar ist,
oder
**dass** der Kanal (140) als Durchgangsbohrung durch den Träger (110, 120) ausgeführt ist, wobei beide offenen Enden des Kanals (140) Innengewinde aufweisen, in die Schrauben einschraubbar sind.

7. Das Tankbehältersystem (100) gemäß einem der vorherigen Ansprüche,
**dadurch gekennzeichnet,**
**dass** der erste Träger (110) und der zweite Träger (120) dazu eingerichtet sind, mit ihrer Längsrichtung (x) in Fahrtrichtung (f) eines Fahrzeugs auf dem Fahrzeug montierbar zu sein.

8. Das Tankbehältersystem (100) gemäß einem der vorherigen Ansprüche,
**dadurch gekennzeichnet,**
**dass** der erste Träger (110) und der zweite Träger (120) dazu eingerichtet sind, mit ihrer Längsrichtung (x) quer zur Fahrtrichtung (f) eines Fahrzeugs (500) auf dem Fahrzeug (500) montierbar zu sein.

9. Das Tankbehältersystem (100) gemäß einem der vorherigen Ansprüche,
**dadurch gekennzeichnet,**
**dass** der erste Träger (110) und der zweite Träger (120) dazu eingerichtet sind, Tankbehälter (150) verschiedener Längenausdehnung aufzunehmen.

10. Ein System (400) mit einem aufgenommenen Tankbehältersystem (100) gemäß einem der vorherigen Ansprüche, wobei das System (400) zusätzlich eine Ventilbox, ein Tanksteuergerät, eine Betankungseinheit und eine Tankstellen-Interface-Einheit aufweist, wobei das System (400) zusätzlich einen Grundrahmen aufweist, an dem das Tankbehältersystem (100), die Ventilbox, das Tanksteuergerät, die Betankungseinheit und die Tankstellen-Interface-Einheit befestigbar sind und wobei der Grundrahmen eine Standardfahrzeugschnittstelle aufweist.

11. Ein Fahrzeug (500) mit einem Tankbehältersystem (100) gemäß einem der Ansprüche 1 bis 9, wobei an dem Tankbehältersystem (100) ein oder mehrere Tankbehälter (150) befüllt mit gasförmigem Triebstoff für einen Antrieb des Fahrzeugs (500) montiert sind.

12. Verfahren (200) zum Ausrüsten eines Fahrzeugs mit einem System (400) gemäß Anspruch 10 zur Aufnahme eines Tankbehältersystems (100) gemäß einem der Ansprüche 1 bis 9, an dem ein oder mehrere Tankbehälter (150) befüllt oder zu befüllen mit gasförmigem Triebstoff für einen Antrieb des Fahrzeugs (500) montiert werden,
**gekennzeichnet durch die Schritte:**
a. Beschaffung und Bevorratung (210) der System-Halbzeuge und Vormontage von Systemmodulen (220), insbesondere von Ventilbox und Tankbehältermodulen;
b. Auslegen (230) der Tankbehälter (150) gemäß der geforderten Fahrzeugspezifikation, Auslegen von erstem und zweiten Träger sowie der Halterpaare des Tankbehältersystems, Auslegen von Ventilbox, Tanksteuergerät, Betankungseinheit und Tankstellen-Interface-Einheit;
c. Auslegen (240) des Grundrahmens;
d. Bearbeitung (250) der System-Halbzeuge sowie der Halterpaare des Tankbehältersystems und auftragsgebunden Zusammenstellung und Zwischenlagerung im Produktionslager (260) von Tankbehältern, erstem Träger (110) und zweitem Träger (120) sowie der Halterpaare des Tankbehältersystems (100), von Ventilbox, Tanksteuergerät, Betankungseinheit und Tankstellen-Interface-Einheit sowie des Grundrahmens;
e. Montage (270) des Grundrahmens und Montage (280) der Tankbehälter (150) an dem Grundrahmen;
f. Montage (290) von Ventilbox, Tanksteuergerät, Betankungseinheit und Tankstellen-Interface-Einheit an dem Grundrahmen;
g. Montage (300) des Tankbehältersystems (100) an dem Fahrzeug.

## Claims

1. A tank container system (100) for mounting on a vehicle (50), having a tank container (150), a first carrier (110) and a second carrier (120), wherein the tank container (150) is mounted on the first and second carrier, wherein the first carrier (110) and the second carrier (120) have brackets (131, 132) for the tank container (150), wherein the brackets (131, 132) are each embodied in pairs, wherein a first bracket (131) of each bracket pair is located on the first carrier (110) and a second bracket (132) of each bracket pair is located on the second carrier (120) in each case, wherein each bracket pair has a floating bearing (135) and a fixed bearing (136) in each case, wherein the brackets (131, 132) are embodied to be interchangeable, wherein the first carrier (110) and the second carrier (120) each have a device (111, 121), in which the first bracket (131) and the second bracket (132) are supported so as to be displaceable and fixable in the longitudinal direction (y) of the respective carrier (110, 120),
**characterized in**
**that** standardized carrier semi-finished products of an extruded profile are used as the first carrier (110) and the second carrier (120),
wherein the device (111, 121) is in each case embodied as groove, which is continuous in the longitudinal direction (y) of the respective carrier (110, 120), wherein the first bracket (131) and the second bracket (132) can in each case be fixed at any point in the longitudinal direction (y) of the respective carrier (110, 120) by means of a sliding block (137), which is guided in the groove, and a clamping screw (133).

2. The tank container system (100) according to claim 1,
**characterized in**
**that** a plurality of tank containers (150) are mounted on the carriers (110, 120), wherein the longitudinal axes of the plurality of tank containers (150) are located in a plane, which is spanned by the longitudinal direction (x) of the plurality of tank containers (150) and the longitudinal direction (y) of the carriers (110, 120).

3. The tank container system (100) according to any one of claims 1 to 2, **characterized in**
**that** a plurality of tank containers (150) are mounted on the carriers (110, 120), wherein brackets (131, 132), which are expanded differently in the vertical direction to the longitudinal direction (y) of the carriers (110, 120) and the longitudinal direction (x) of tank containers (150), which can be fastened to the carriers (110, 120), are located in the longitudinal direction (y) of the carriers (110, 120).

4. The tank container system (100) according to claim 3,
**characterized in**
**that** the tank containers (150), which are mounted on the carriers (110, 120), are located in two respective alternating heights in the height direction (z) of the brackets (131, 132) or in a W-shape expanded in the height direction (z) of the brackets (131, 132) or in a semi-circular or elliptical shape expanded in the height direction (z) of the brackets (131, 132).

5. The tank container system (100) according to any one of the preceding claims, **characterized in**
**that** at least one channel (140) is integrated in the first carrier (110) and/or in the second carrier (120).

6. The tank container system (100) according to claim 5,
**characterized in**
**that** the channel (140) is embodied as blind hole through the carrier (110, 120), wherein the open end of the channel (140) has an internal thread, into which a screw can be screwed,
or
**that** the channel (140) is embodied as through hole through the carrier (110, 120), wherein both open ends of the channel (140) have internal threads, into which screws can be screwed.

7. The tank container system (100) according to any one of the preceding claims, **characterized in**
**that** the first carrier (110) and the second carrier (120) are configured to be capable of being mounted on a vehicle with their longitudinal direction (x) in the driving direction (f) of the vehicle.

8. The tank container system (100) according to any one of the preceding claims, **characterized in**
**that** the first carrier (110) and the second carrier (120) are configured to be capable of being mounted on a vehicle (500) with their longitudinal direction (x) transversely to the driving direction (f) of the vehicle (500).

9. The tank container system (100) according to any one of the preceding claims, **characterized in**
**that** the first carrier (110) and the second carrier (120) are configured to receive tank containers (150) of a different longitudinal expansion.

10. A system (400) with a received tank container system (100) according to any one of the preceding claims, wherein the system (400) additionally has a valve box, a tank control device, a fueling unit and a fueling station interface unit, wherein the system (400) additionally has a base frame, to which the tank container system (100), the valve box, the tank control device, the fueling unit and the fueling station interface unit can be fastened and wherein the base frame has a standard vehicle interface.

11. A vehicle (500) with a tank container system (100) according to any one of claims 1 to 9,
wherein one or several tank containers (150) filled with gaseous fuel for a drive of the vehicle (500) are mounted on the tank container system (100).

12. A method (200) for equipping a vehicle with a system (400) according to claim 10 for receiving a tank container system (100) according to any one of claims 1 to 9, on which one or several tank containers (150), which are filled or which are to be filled with gaseous fuel for a drive of the vehicle (500), are mounted,
**characterized by the steps of:**
a. obtaining and storing (210) the system semi-finished products and preassembly of system modules (220), in particular of valve box and tank container modules;
b. designing (230) the tank containers (150) according to the required vehicle specification, designing first and second carriers as well as the bracket pairs of the tank container system, designing valve box, tank control device, fueling unit and fueling station interface unit;
c. designing (240) the base frame;
d. processing (250) the system semi-finished products as well as the bracket pairs of the tank container system and order-specific compilation and intermediate storage in the production warehouse (260) of tank containers, first carrier (110) and second carrier (120) as well as of the bracket pairs of the tank container system (100), of valve box, tank control device, fueling unit and fueling station interface unit as well as of the base frame;
e. mounting (270) the base frame and mounting (280) the fuel containers (150) on the base frame;
f. mounting (290) valve box, tank control device, fueling unit and fueling station interface unit on the base frame;
g. mounting (300) the tank container system (100) on the vehicle.

## Revendications

1. Un système de réservoir (100) destiné à être monté sur un véhicule (50), comprenant un réservoir (150), un premier support (110) et un deuxième support (120),
le réservoir (150) étant monté sur le premier et le deuxième support,
le premier support (110) et le deuxième support (120) comprenant des éléments de fixation (131, 132) pour le réservoir (150), les éléments de fixation (131, 132) étant respectivement réalisés par paires, un premier élément de fixation (131) de chaque paire d'éléments de fixation étant disposé sur le premier support (110) et un deuxième élément de fixation (132) de chaque paire d'éléments de fixation étant disposé sur le deuxième support (120), chaque paire d'éléments de fixation comprenant respectivement un palier libre (135) et un palier fixe (136), les éléments de fixation (131, 132) étant conçus de manière interchangeable, le premier support (110) et le deuxième support (120) comprenant chacun un dispositif (111, 121) dans lequel le premier élément de fixation (131) et le deuxième élément de fixation (132) sont montés de manière à pouvoir être déplacés et fixés dans la direction longitudinale (y) du support respectif (110, 120),
**caractérisé en ce que**
le premier support (110) et le deuxième support (120) sont constitués de profilés semi-finis standardisés, réalisés sous forme de profilés extrudés, le dispositif (111, 121) étant respectivement réalisé sous la forme d'une rainure continue dans la direction longitudinale (y) du support respectif (110, 120), le premier élément de fixation (131) et le deuxième élément de fixation (132) pouvant respectivement être fixés à n'importe quel emplacement dans la direction longitudinale (y) du support respectif (110, 120) au moyen d'un écrou en T (137) guidé dans la rainure et d'une vis de serrage (133).

2. Le système de réservoir (100) selon la revendication 1,
**caractérisé en ce que**
une pluralité de réservoirs (150) sont montés sur les supports (110, 120), les axes longitudinaux de ladite pluralité de réservoirs (150) se trouvant dans un plan défini par la direction longitudinale (x) de ladite pluralité de réservoirs (150) et la direction longitudinale (y) des supports (110, 120).

3. Le système de réservoir (100) selon l'une des revendications 1 à 2,
**caractérisé en ce que**
une pluralité de réservoirs (150) sont montés sur les supports (110, 120), dans lesquels, dans la direction longitudinale (y) des supports (110, 120), se trouvent des éléments de fixation (131, 132), s'étendant différemment dans une direction perpendiculaire à la direction longitudinale (y) des supports (110, 120) et à la direction longitudinale (x) des réservoirs (150) pouvant être fixés aux supports (110, 120).

4. Le système de réservoir (100) selon la revendication 3,
**caractérisé en ce que**
les réservoirs (150) montés sur les supports (110, 120) sont disposés selon deux hauteurs qui s'alternent respectivement dans la direction de la hauteur (z) des éléments de fixation (131, 132), ou se trouvent selon une forme en W s'étendant dans la direction de la hauteur (z) des éléments de fixation (131, 132), ou selon une forme semi-circulaire ou elliptique s'étendant dans la direction de la hauteur (z) des éléments de fixation (131, 132).

5. Le système de réservoir (100) selon l'une des revendications précédentes, **caractérisé en ce que**
au moins un canal (140) est intégré dans le premier support (110) et/ou dans le deuxième support (120).

6. Le système de réservoir (100) selon la revendication 5,
**caractérisé en ce que**
le canal (140) est réalisé sous la forme d'un trou borgne traversant le support (110, 120), l'extrémité ouverte du canal (140) présentant un filetage intérieur dans lequel une vis peut être vissée,
ou
**en ce que** le canal (140) est réalisé sous la forme d'un trou traversant le support (110, 120), les deux extrémités ouvertes du canal (140) présentant des filetages intérieurs dans lesquels des vis peuvent être vissées.

7. Le système de réservoir (100) selon l'une des revendications précédentes, **caractérisé en ce que**
le premier support (110) et le deuxième support (120) sont configurés pour être montés sur le véhicule de manière que leur direction longitudinale (x) s'étende dans la direction de marche (f) du véhicule.

8. Le système de réservoir (100) selon l'une des revendications précédentes, **caractérisé en ce que**
le premier support (110) et le deuxième support (120) sont configurés pour être montés sur le véhicule (500) de manière que leur direction longitudinale (x) soit perpendiculaire à la direction de marche (f) du véhicule (500).

9. Le système de réservoir (100) selon l'une des revendications précédentes, **caractérisé en ce que**
le premier support (110) et le deuxième support (120) sont configurés pour recevoir des réservoirs (150) présentant différentes longueurs.

10. Un système (400) comprenant un système de réservoir (100) selon l'une des revendications précédentes, ledit système (400) comprenant en outre un boîtier de vannes, un dispositif de commande du réservoir, une unité de ravitaillement et une unité d'interface avec une station-service, le système (400) comprenant en outre un châssis de base auquel le système de réservoir (100), le boîtier de vannes, le dispositif de commande du réservoir, l'unité de ravitaillement et l'unité d'interface avec la station-service peuvent être fixés, et le châssis de base présentant une interface standardisée pour véhicule.

11. Un véhicule (500) comprenant un système de réservoir (100) selon l'une des revendications 1 à 9,
un ou plusieurs réservoirs (150) remplis d'un carburant gazeux destiné à la propulsion du véhicule (500) étant montés sur le système de réservoir (100).

12. Un procédé (200) pour équiper un véhicule d'un système (400) selon la revendication 10, destiné à recevoir un système de réservoir (100) selon l'une des revendications 1 à 9, dans lequel un ou plusieurs réservoirs (150), remplis ou destinés à être remplis d'un carburant gazeux destiné à la propulsion du véhicule (500), sont montés, **caractérisé par les étapes suivantes :**
a. Approvisionnement et stockage (210) des profilés semi-finis du système et prémontage de modules du système (220), notamment du boîtier de vannes et des modules de réservoir ;
b. Conception (230) des réservoirs (150) conformément aux spécifications requises du véhicule, conception du premier et du deuxième support ainsi que des paires d'éléments de fixation du système de réservoir, conception du boîtier de vannes, du dispositif de commande du réservoir, de l'unité de ravitaillement et de l'unité d'interface avec la station-service ;
c. Conception (240) du châssis de base ;
d. Usinage (250) des profilés semi-finis du système ainsi que des paires d'éléments de fixation du système de réservoir, assemblage en fonction de la commande et stockage intermédiaire des réservoirs, du premier support (110) et du deuxième support (120) ainsi que des paires d'éléments de fixation du système de réservoir (100), du boîtier de vannes, du dispositif de commande du réservoir, de l'unité de ravitaillement et de l'unité d'interface avec la station-service ainsi que du châssis de base dans le magasin de production (260) ;
e. Montage (270) du châssis de base et montage (280) des réservoirs (150) sur le châssis de base ;
f. Montage (290) du boîtier de vannes, du dispositif de commande du réservoir, de l'unité de ravitaillement et de l'unité d'interface avec la station-service sur le châssis de base ;
g. Montage (300) du système de réservoir (100) sur le véhicule.
